# EUROPEAN PATENT APPLICATION

(11) **EP 1 345 307 A2**
(43) Date of publication of application: **17.09.2003**
(21) Application number: 03005594.1
(22) Date of filing: 12.03.2003
(51) Int. Cl.: H02K 7/08

(54) **Driving device for a roller blind, such as for curtains or roller shutters**

(30) Priority: 13.03.2002 IT VI20020042
(71) Applicant: FITEM SRL, 30030 Maerne (VE) (IT)
(72) Inventor: Berengo, Giorgia, 30174 Mestre (VE) (IT)
(74) Representative: Bonini, Ercole

(57) **Abstract**

A driving device (1) for rolling up elements such as curtains or roller shutters comprising a tubular body (2) with a mostly longitudinal development which coaxially lodges the stator (3) of an electrical motor (4) having the shaft (6) of the rotor (5) that has a first end (6a) supported by a first bearing (11) and coupled to a brake (7) and a second end (6b) supported by a second bearing (13) and coupled to a reduction unit (8) with an output shaft (9) connectable to said curtain or roller shutter to be rolled/unrolled. The device has elastic means (15) interposed between one of the bearings (6b) and the rotor (5).

## Description

The invention regards a driving device for rolling up elements particularly suitable for rolling up and unrolling curtains or roller shutters.

It is known that for rolling up and unrolling curtains or roller shutters, appropriate driving devices are used which consist of ratio motors, equipped with adjustable stop means and with braking means.

According to some preferred embodiments available on the market, said driving devices comprise a tubular body with a mostly longitudinal development wherein an electric motor is lodged, with a shaft projecting at both ends, connected on one side to a reduction unit with an output shaft protruding from said cylinder and on the other side to braking means. In the same tubular body, stop and limit devices of the motor can be also enclosed.

A well known inconvenience of the abovementioned driving devices is the noisiness which represents one of their biggest problems, above all when they are assembled in the bedroom area of some apartments.

As a matter of fact, it is understood that a high noisiness makes their operation bothersome, especially at night time.

Among the causes that contribute to determine the noisiness of the abovementioned driving devices during their operation, there are the axial oscillations of the motor's rotor and the driving shaft.

The present invention intends to solve such inconveniences by making a driving device for rolling up and unrolling curtains or roller shutters which has a lower noisiness than the matching state of the art driving devices.

Said object is achieved through a driving device for rolling up elements such as curtains or roller shutters comprising a tubular body with a mostly longitudinal development which coaxially lodges the stator of an electrical motor having the rotor's shaft that has a first end supported by a first bearing and coupled to braking means and a second end supported by a second bearing and coupled to a reduction unit with an output shaft connectable to said curtain or roller shutter to be rolled up and unrolled and is characterized by comprising elastic means axially interposed between at least one of said bearings and said motor.

Preferably, the elastic means consist of a helical spring coaxially arranged to said driving motor and comprised between a bearing and the rotor.

Advantageously, the spring dampens the axial oscillations that the rotor inevitably has, thus reducing the noisiness during the operation.

Said objects and advantages will be better highlighted during the following description in an explanatory but not limiting way of a preferred embodiment of the invention making reference to the annexed drawing sheets, wherein:
- Figure 1 is a longitudinal section of the invented device;
- Figure 2 is an enlarged detail of the section of figure 1.

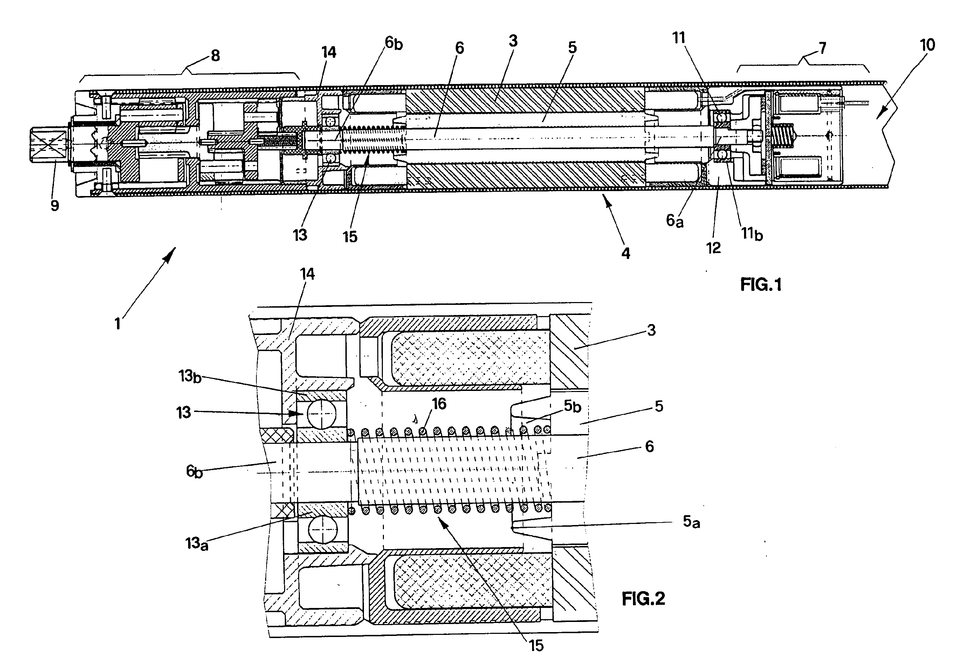

As described in figure 1, the driving device of the invention, generally indicated with the number 1, comprises a tubular body 2 with a mostly longitudinal development that coaxially lodges the stator 3 of an electrical motor 4, having the rotor 5 which has the driving shaft 6 connected on one side to a brake 7 and on the opposite part to a reduction unit, generally indicated with the number 8.

The output shaft 9 of the reduction unit 8 protrudes from the tubular body 2 and is connected to the rolling up means of the curtain or roller shutter, not shown in the drawing.

In the area of the tubular body 2 generally indicated with the number 10, limit means, not shown, can be enclosed.

More specifically, it is described that the driving shaft 6 has a first end 6a coupled to the brake 7 and supported by a first bearing 11 having the outer ring 11b lodged into a first annular body which makes up the brake-carrying housing 12 coaxially placed into the tubular body 2.

The opposite end 6b is coupled to the reduction unit 8 and is supported by a second bearing 12 whose outer ring 13b is lodged into a second annular body coaxially arranged in the tubular body 2 which makes up the centering cap 14 of the reduction unit 8.

According to the invention, elastic means 15 are interposed between the second bearing 13 and the rotor 5.

More specifically, as described in figure 2, elastic means 15 consist of, preferably but not necessarily, a helical spring 16 coaxially arranged outside of the second end 6b of the driving shaft 6 and enclosed between the inner ring 13a of the second bearing 13 and a housing 5a made out of the side wall 5b of the rotor 5.

In a different embodiment the elastic means could be placed on a first end 6a of the driving shaft 6 or even on both ends.

Furthermore, the elastic means could also be made of any number of springs, and even of a different kind.

The presence of the spring 16 generates an axial thrust on the bearings 11 and 13 according to the longitudinal axis Z defined by the driving shaft 6 which keeps the balls forced into the respective races. The end plays are thus taken up and the oscillations of the rotor 3 are prevented during the operation.

It is obvious that the object of reducing the overall noisiness of the device during the operation is accomplished.

Based on what has been previously said it is understood that the driving device of the invention achieves the preset objects.

During the operative phase constructional variations from those previously mentioned could be made, suitable to carry out structural embodiments of the invented device.

Whenever those structural embodiments fall within the scope of the following claims, they should be all considered protected by the present patent.

## Claims

1. A driving device (1) for rolling up elements such as curtains or roller shutters comprising a tubular body (2) with a mostly longitudinal development which coaxially lodges the stator (3) of an electrical motor (4) having the shaft (6) of the rotor (5) that has a first end (6a) supported by a first bearing (11) and coupled to a brake (7) and a second end (6b) supported by a second bearing (13) and coupled to a reduction unit (8) with an output shaft (9) connectable to said curtain or roller shutter to be rolled/unrolled, **characterized by** comprising elastic means (15) axially interposed between at least one of said bearings (6b) and said rotor (5).

2. The driving device (1) according to claim 1, **characterized in that** said elastic means (15) are enclosed between the inner ring (13a) of the second bearing (13) and the side wall (5b) of the rotor (5).

3. The driving device (1) according to claim 2, **characterized in that** a housing (5a) which lodges said elastic means (15) is made inside said side wall (5b) of said rotor (5).

4. The driving device (1) according to any of the previous claims, **characterized in that** said elastic means (15) consist of at least one spring (16).

5. The driving device (1) according to claim 4, **characterized in that** said at least one spring (16) is of the helical type and is coaxially arranged outside of said second end (6b) of said driving motor (6).

6. The driving device (1) according to claim 1, **characterized in that** said first bearing (11) and said second bearing (13) have an outer ring (11b, 13b) lodged into a corresponding keyed annular body coaxially fixed inside of said tubular body (2).

7. The driving device (1) according to claim 6, **characterized in that** said annular body which lodges said outer ring (13b) of said second bearing (13) is the centering cap (14) of the reduction unit (8).

8. The driving device (1) according to claim 6, **characterized in that** said annular body which lodges said outer ring (11 b) of said first bearing (11) is the brake-carrying housing (12).
